# EUROPÄISCHE PATENTSCHRIFT

(11) **EP 1 928 680 B1**
(45) Veröffentlichungstag und Bekanntmachung des Hinweises auf die Patenterteilung: **11.02.2009**
(21) Anmeldenummer: 06805826.2
(22) Anmeldetag: 23.09.2006
(51) Int. Cl.: B60K 7/00

(54) **ANTRIEBSEINHEIT MIT OPTIMIERTER KÜHLUNG**
DRIVE UNIT HAVING OPTIMIZED COOLING
UNITE D'ENTRAINEMENT A REFROIDISSEMENT OPTIMISE

(30) Priorität: 29.09.2005 DE 102005046618
(43) Veröffentlichungstag der Anmeldung: 11.06.2008
(73) Patentinhaber: ZF FRIEDRICHSHAFEN Aktiengesellschaft, 88038 Friedrichshafen (DE)
(72) Erfinder: SCHARFENBERG, Stephan, 99869 Tüttleben (DE); ALTVATER, Roland, 88046 Friedrichshafen (DE); HEINRICH, Kai, 88285 Bodnegg (DE); NOLD, Markus, 88045 Friedrichshafen (DE); HERING, Torsten, 88662 Überlingen (DE)
(86) Internationale Anmeldenummer: PCT/EP2006/009263
(87) Internationale Veröffentlichungsnummer: WO 2007/036333

(56) Entgegenhaltungen:
- EP-A- 1 559 604
- DE-A1- 10 328 651
- DE-U1- 29 601 339

## Beschreibung

Die Erfindung betrifft eine elektrische Antriebseinheit mit zumindest einem Lenkmotor und einem dazu koaxial angeordneten Fahrmotor entsprechend dem Oberbegriff des Anspruchs 1 sowie dem Oberbegriff des Anspruchs 6.

Solche Antriebseinheiten sind bekannt aus Flurförderfahrzeugen, bei denen ein Fahrzeugrad durch einen Antriebsmotor angetrieben und durch einen Lenkmotor gelenkt werden.

Demgemäß offenbart die DE 199 49 351 A1 eine elektrische Antriebseinheit für ein Flurförderfahrzeug, bei welchem ein Antriebsmotor und ein Lenkmotor koaxial angeordnet und beide Elektromotoren vertikal im Fahrzeug montiert sind. Dabei befindet sich zwischen dem Fahr- und dem Lenkmotor ein Untersetzungsgetriebe.

Die DE 103 28 651 A1 zeigt eine elektrische Antriebseinheit, bei welcher ebenso ein Antriebs- und ein Lenkmotor koaxial angeordnet und vertikal im Fahrzeug montiert sind. Der Fahrmotor befindet sich direkt über dem Lenkmotor.

Bei den bekannten Antriebseinheiten sind die Elektronikeinheiten der Antriebe außerhalb des Gehäuses der Antriebseinheit angebracht. Dadurch kann die sich bildende Wärme leicht abgeführt werden. Werden die Elektronikeinheiten an oder in die Antriebseinheit integriert, muß ein stabiler Wärmehaushalt sichergestellt werden.

Der vorliegenden Erfindung liegt die Aufgabe zugrunde, eine kompakt bauende Antriebseinheit zu schaffen, welche eine besonders gute Wärmeabfuhr ermöglicht.

Diese Aufgabe wird mit einer Antriebseinheit entsprechend den Merkmalen des Anspruchs 1 sowie des Anspruchs 6 gelöst.

Erfindungsgemäß wird die Aufgabe gelöst durch eine elektrische Antriebseinheit mit einem Lenkmotor und einem Fahrmotor, welche koaxial zueinander angeordnet sind. Dabei treibt der Lenkmotor ein Fahrzeugrad im Sinne einer Lenkbewegung, der Fahrmotor das Fahrzeugrad im Sinne einer Antriebsbewegung an. Der erste der beiden Motoren besitzt eine hohle Antriebswelle, durch welche eine zweite Antriebswelle des zweiten Motors hindurchragt. Die zweite Antriebswelle ragt weiterhin durch eine erste axiale Außenwand der Antriebseinheit hindurch. Diese erste Außenwand befindet sich in axialer Richtung auf der dem Antriebsrad entgegengesetzten Seite und trennt die gesamte Antriebseinheit von der äußeren Umgebung. Die zweite Antriebswelle ist auf der Außenseite der ersten Außenwand mit einem Lüfterrad drehfest verbunden. Das Lüfterrad fördert Luft in radialer Richtung entlang der ersten Außenwand und ermöglicht eine gute Kühlung der Antriebseinheit.

In einer Ausgestaltung ist die erste Außenwand an ihrer Außenseite mit Kühlrippen versehen, an denen die durch das Lüfterrad geförderte Luft entlang strömt. Dadurch wird die Kühlung der Antriebseinheit verbessert. Die Kühlrippen verlaufen vorteilhafter Weise in radialer Richtung.

In einer Ausgestaltung besitzt die Antriebseinheit eine zweite Außenwand, welche mit der ersten Außenwand einen Kühlkanal bildet. Durch diesen Kühlkanal wird die vom Lüfterrad geförderte Luft radial nach außen gefördert. Damit dem Lüfterrad Luft zum Kühlen zugeführt werden kann, besitzt die zweite Außenwand einen Durchbruch in axialer Richtung. Auch die zweite Außenwand besitzt vorteilhafterweise Kühlrippen. Zudem können an der Innen- und/oder Außenseite der ersten und/oder der zweiten Außenwand Teile der Elektronikeinheiten der beiden Antriebsmotoren angebracht sein. Durch die Anbringung der Elektronikeinheiten in der Nähe der mit Luft gekühlten Kühlrippen wird die Kühlung der Antriebseinheit weiter verbessert. Die Kühlrippen können in einer Ausgestaltung auch einteilig mit der ersten und/oder zweiten Außenwand gefertigt sein.

In einer weiteren Ausgestaltung ist an der zweiten Außenwand, in radialer Richtung gesehen, außen eine Umlenkung angebracht, welche die vom Lüfterrad in radialer Richtung geförderte Luft aus dem Kühlkanal so umlenkt, dass sie an der Außenseite der radialen Außenwand entlang strömt.

Eine weitere Ausgestaltung der Antriebseinheit besitzt ebenfalls einen Lenkmotor und einen Fahrmotor, welche koaxial zueinander angeordnet sind. Dabei treibt der Lenkmotor ein Fahrzeugrad im Sinne einer Lenkbewegung, der Fahrmotor das Fahrzeugrad im Sinne einer Antriebsbewegung an. Ein erster der beiden Motoren besitzt eine hohle Antriebswelle, durch welche eine zweite Antriebswelle des zweiten Motors hindurchragt. Am Rotor des zweiten Motors ist ein zweites Lüfterrad angebracht. Dieses Lüfterrad fördert Luft vorteilhafterweise um den Stator des zweiten Motors herum. Dafür ist in der radialen Außenwand ein zweiter Kühlkanal ausgebildet, durch welchen die vom zweiten Lüfterrad geförderte Luft an der Außenseite des zweiten Motors in axialer Richtung entlanggeführt wird.

In einer weiteren Ausgestaltung wird das Antriebsgehäuse über ein axiales Lager mit einem Fahrzeugrahmen verbunden. Dabei wird der Zwischenraum zwischen Außenring des Lagers und Fahrzeugrahmen vorteilhafterweise mit einem wärmeleitenden Material gefüllt, um die Wärmeabfuhr aus dem Gehäuse der Antriebseinheit durch Wärmeleitung in den Fahrzeugrahmen zu verbessern.

In einer weiteren Ausgestaltung wird der Außenring des Lagers im Sinne einer hohen Wärmeleitung ausgelegt. Der Innenring des Lagers ist dabei so ausgeformt, dass das Lager eine vorgeschriebene Lebensdauer erreicht. Bei der Auslegung des Außenrings wird zusätzlich die Wärmeübertragung durch Wärmeleitung zwischen dem Gehäuse der Antriebseinheit und dem Außenring sowie zwischen dem Außenring und dem Fahrzeugrahmen berücksichtigt. Je größer die die beiden Kontaktflächen sind, desto mehr Wärme kann durch Wärmeleitung übertragen werden. Die Größe der Kontaktflächen hängt von der radialen Überdeckung und somit von der radialen Breite des Außenrings ab.

In einer Ausgestaltung ist zwischen dem zweiten Motor und der ersten axialen Außenwand eine Fahrzeugbremse angeordnet. In einer vorteilhaften Ausgestaltung ist der erste Motor der Lenkmotor und der zweite Motor der Fahrmotor.

In einer weiteren Ausgestaltung ist eine weitere elektronische Steuereinheit unterhalb des ersten Motors angeordnet und mit dem ersten Motor direkt verbunden.

Zur weiteren Verdeutlichung der Erfindung sowie dessen Ausführungsformen ist der Beschreibung eine Zeichnung beigefügt.
In dieser zeigen:
- Fig. 1: Aufbau einer Antriebseinheit und
- Fig. 2: Lagerung der Antriebseinheit im Fahrzeugrahmen.

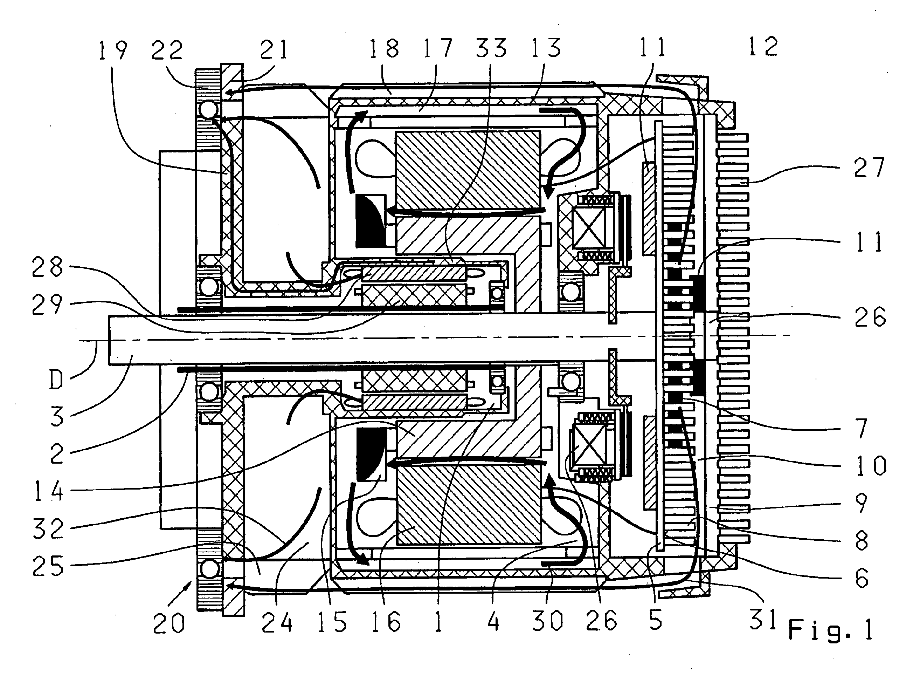

Fig.1 zeigt eine elektrische Antriebseinheit mit einem Lenkmotor 1 und einem Fahrmotor 4, welche koaxial zueinander angeordnet sind und jeweils einen Stator 28, 16 und einen Rotor 29, 14 besitzen. Die Antriebseinheit besitzt eine Drehachse D. Eine erste Antriebswelle 2 ist hohl ausgeführt. Durch die erste Antriebswelle 2 ragt eine zweite Antriebswelle 3. Die zweite Antriebswelle 3 ragt weiterhin durch eine Bremsvorrichtung 26 sowie eine erste axiale Außenwand 5 hindurch und ist auf deren Außenseite 6 mit einem Lüfterrad 7 drehfest verbunden. Die Bremseinrichtung 26 befindet sich in axialer Richtung zwischen dem Fahrmotor 4 und der ersten Außenwand 5. Direkt an der ersten Außenwand 5 sind Teile einer Elektronikeinheit 11 angebracht. Eine zweite axiale Außenwand 9 ist so angeordnet, dass sie mit der ersten Außenwand 5 einen Kühlkanal 10 bildet. An den beiden Außenwänden 5, 9 sind radial verlaufende Kühlrippen 8, 27 angebracht. Auch an der zweiten Außenwand 9 sind Teile 11 einer Elektronikeinheit angeordnet. Die Teile 11 der Elektronikeinheit können beispielsweise eine Leistungselektronik und/oder eine Signalelektronik des Fahrmotors 4 und/oder eine Signalelektronik des Lenkmotors 1 darstellen. Die Elektronikeinheit kann auch einstückig mit einer der beiden Außenwände 5, 9 ausgeführt sein. Das Lüfterrad 7 wird bei sich drehendem Antriebsmotor 4 so angetrieben, dass es Luft in radialer Richtung durch den Kühlkanal 10 bläst. Damit das Lüfterrad 7 Luft fördern kann, besitzt die zweite Außenwand 9 einen axialen Durchbruch 26. Durch die Anordnung der Teile 11 einer Elektronikeinheit an der ersten und der zweiten Außenwand 5, 9 wird eine besonders gute Kühlung ermöglicht.

An der zweiten Außenwand 9 ist eine Umlenkung 12 angebracht. Durch diese Umlenkung 12 wird die in radialer Richtung geförderte Luft so umgelenkt, dass sie nach der Umlenkung in axialer Richtung am Gehäuse 19 der Antriebseinheit entlang strömt. Die radiale Außenwand 13 ist zudem mit weiteren, axial angeordneten Kühlrippen 18 versehen. Eine Elektronikeinheit 24 ist direkt unterhalb der beiden ineinander geschachtelten Motoren 1, 4 angebracht und ebenfalls an ihrer radialen Außenseite mit Kühlrippen 25 versehen. Die Elektronikeinheit 24 enthält zumindest Teile der Elektronik für den Lenkantrieb 1. Das Gehäuse 19 der Antriebseinheit ist über ein Lager 20 in einem Fahrzeugrahmen 21 gelagert.

Der Rotor 14 des Fahrmotors 4 ist an seiner Unterseite mit einem zweiten Lüfterrad 15 versehen. Das zweite Lüfterrad 15 fördert die Luft im Innenraum des Gehäuses des Fahrmotors 4 so, dass sie um den Stator 16 herum strömt. Dafür ist in der radialen Außenwand 13 ein Kühlkanal 17 ausgeformt, durch welchen die geförderte Luft in axialer Richtung am Fahrmotor 4 strömen kann.

Zur Verdeutlichung der Erfindung sind in der Zeichnung die Strömungsrichtungen 30, 31 der von den Lüfterrädern 7, 15 geförderten Luft dargestellt. Auch die Richtung 32 der verbesserten Wärmeleitung aus dem Gehäuse 19 der Antriebseinheit ist gezeigt. Man erkennt auch, dass die Elektronikeinheit 24 und der Lenkmotor 1 thermisch entkoppelt sind. Weiterhin ist die Außenwand 33 des Lenkmotors so verdickt, dass sich die Wärmeleitung verbessert.

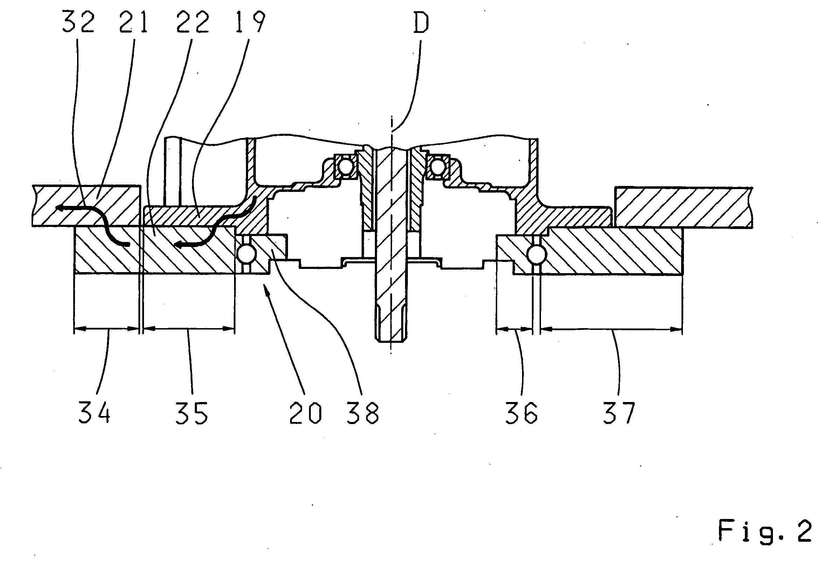

Fig. 2 zeigt eine Lagerung des Gehäuses 19 der Antriebseinheit in einem Fahrzeugrahmen 21. Die radiale Breite 36 des Innnenrings 39 ist zumindest so ausgelegt, daß das Lager 20 eine vorgeschriebene Lebensdauer erreicht und ist wesentlich kleiner als die radiale Breite 37 des Außenrings. Das Gehäuse 19 liegt auf dem Außenring 22 des Lagers 20 auf und wird mit ihm vorteilhafter Weise über eine Schraubverbindung drehfest verbunden. Die radiale Breite 37 des Außenrings 22 ist breiter ausgestaltet, als es für die Erreichung der vorgeschriebenen Lebensdauer notwendig ist. Dadurch sind große radiale Überdeckungen 35, 34 zwischen dem Gehäuse 19 und dem Außenring 22 sowie zwischen dem Außenring 22 und dem Fahrzeugrahmen 21 möglich. Durch die großen Kontaktflächen zwischen Gehäuse 19, Außenring 22 und Fahrzeugrahmen 21 ist eine hohe Wärmeleitung sichergestellt. Die radiale Breite 37 des Außenrings 22 wird so ausgelegt, dass das Lager 20 ein bestimmtes erstes Temperaturniveau nicht überschreitet. Das erste Temperaturniveau beschreibt die Temperatur, bei dem der Schmierstoff des Lagers 20 Schaden nimmt und eventuell aus dem Lager 20 austritt. In einer weiteren Ausgestaltung wird die radiale Breite 37 so ausgelegt, dass der erste Motor 1 mit der dazugehörigen Elekronikeinheit 24 ein festgelegtes zweites Temperaturniveau nicht überschreitet. Vorteilhafter Weise wird in einer weiteren Ausgestaltung das höhere der beiden Temperaturniveaus für Auslegung des Außenrings 22 berücksichtigt. Die radiale Breite 37 des Außenrings 22 ist dabei wesentlich größer als die radiale Breite 36 des Innenrings 38. Vorteilhafter Weise ist die radiale Breite 37 des Außenrings 20 mehr als doppelt so groß wie die radiale Breite 36 des Innenrings 38.

### Bezugszeichen

- 1: erster Motor
- 2: erste Antriebswelle
- 3: zweite Antriebswelle
- 4: zweiter Motor
- 5: erste Außenwand
- 6: Außenseite
- 7: erstes Lüfterrad
- 8: Kühlrippen
- 9: zweite axiale Außenwand
- 10: erster Kühlkanal
- 11: Teile einer Elektronikeinheit
- 12: Umlenkung
- 13: radiale Außenwand
- 14: Rotor
- 15: Lüfterrad
- 16: Stator
- 17: zweiter Kühlkanal
- 18: Kühlrippen
- 19: Gehäuse
- 20: Lager
- 21: Fahrzeugrahmen
- 22: Außenring Lager
- 23: wärmeleitendes Material
- 24: Elektronikeinheit
- 25: Kühlrippen
- 26: Durchbruch
- 27: Kühlrippen
- 28: Stator
- 29: Rotor
- 30: Strömungsrichtung
- 31: Strömungsrichtung
- 32: Strömungsrichtung
- 33: Außenwand
- 34: radiale Überdeckung
- 35: radiale Überdeckung
- 36: radiale Breite
- 37: radiale Breite
- 38: Innenring

- D: Drehachse

## Patentansprüche

1. Elektrische Antriebseinheit mit einem Lenkmotor und einem Fahrmotor, welche koaxial zueinander angeordnet sind und welche ein Fahrzeugrad lenken bzw. im Sinne einer Fahrbewegung antreiben, wobei ein erster Motor (1) eine hohle Antriebswelle (2) besitzt, durch welche eine zweite Antriebswelle (3) des zweiten Motors (4) hindurchragt, **dadurch gekennzeichnet, dass** die zweite Antriebswelle (3) durch eine erste axiale Außenwand (5) der Antriebseinheit hindurchragt und auf der Außenseite (6) mit einem Lüfterrad (7) drehfest verbunden ist.

2. Antriebseinheit nach einem der vorherigen Ansprüche, **dadurch gekennzeichnet, dass** die erste Außenwand (5) mit einer zweiten Außenwand (9) einen Kühlkanal (10) bildet, durch welchen über mehrere Öffnungen Luft radial nach außen geblasen wird.

3. Antriebseinheit nach Anspruch 2, **dadurch gekennzeichnet, dass** an der ersten und/oder an der zweiten Außenwand (5, 9) Teile (11) einer elektronischen Steuereinheit angebracht sind.

4. Antriebseinheit nach Anspruch 1, **dadurch gekennzeichnet, dass** an der Außenseite (6) der ersten Außenwand (5) und/oder an der zweiten Außenwand (9) Kühlrippen (8, 27) angebracht sind.

5. Antriebseinheit nach Anspruch 3, **dadurch gekennzeichnet, dass** an der zweiten Außenwand (9) Kühlrippen (27) sowie eine Umlenkung (12) angebracht ist, welche die nach radial außen strömende Luft so umlenkt, dass sie in axialer Richtung an der radialen Außenwand (13) der Antriebseinheit entlanggeführt wird.

6. Elektrische Antriebseinheit mit einem Lenkmotor und einem Fahrmotor, welche koaxial zueinander angeordnet sind und welche eine Fahrzeugrad lenken bzw. im Sinne einer Fahrbewegung antreiben, wobei ein erster Motor (1) eine hohle Antriebswelle (2) besitzt, durch welche eine zweite Antriebswelle (3) des zweiten Motors (4) hindurchragt, **dadurch gekennzeichnet, dass** an mindestens einem axialen Ende des Rotors (14) des zweiten Motors (4) ein zweites Lüfterrad (15) angebracht ist, welches die innenluft des zweiten Motors (4) so fördert, dass sie um Stator (16) des zweiten Motors (4) herum strömt.

7. Antriebseinheit nach Anspruch 6, **dadurch gekennzeichnet, dass** in der radialen Außenwand (13) mindestens ein Kühlkanal (17) angebracht ist, durch welchen die vom zweiten Lüfterrad (15) geförderte Luft axial am zweiten Motors (4) entlanggeführt wird.

8. Antriebseinheit nach einem der vorherigen Ansprache, **dadurch gekennzeichnet, dass** an der radialen Au ßenwand (13) der Antriebseinheit und/oder an einer Elektronikeinheit (24) des ersten Motors (1) Kühlrippen (18, 25) angebracht sind.

9. Antriebseinheit nach einem der vorherigen Ansprüche, **dadurch gekennzeichnet, dass** das Gehäuse (19) der Antriebseinheit über ein axiales Lage (20) mit einem Fahrzeugrahment (21) verbunden ist, der Außenring (22) des Lagers (20) zusätzlich über wärmeleitendes Material (23) mit dem Fahrzeugrahmen (2-1) verbunden ist.

10. Antriebseinheit nach einem der vorherigen Ansprüche, **dadurch gekennzeichnet, dass** die radiale Breite (37) des Außenrings (22) für eine bessere Wärmeübertragung wesentlich breiter als die radiale Breite (36) des Innenrings (38) ausgestaltet ist.

11. Antriebseinheit nach einem der vorherigen Ansprüche, **dadurch gekennzeichnet, dass** die radiale Breite (37) des Außenrings (22) mindestens doppelt so groß ist, wie die radiale Breite (36) des Innenrings (38).

12. Antriebseinheit nach einem der vorherigen Ansprüche, **dadurch gekennzeichnet, dass** die radialen Überdeckungen (34, 35) zwischen dem Gehäuse (19) der Antriebseinheit, dem Außenring (22) des Lagers (20) und dem Fahrzeugrahmen (21) so breit ausgestaltet sind, dass durch eine Wärmeleitung so viel Wärme abgeführt wird, dass ein erstes und/oder zweites Temperaturniveau nicht überschritten wird.

13. Antriebseinheit nach einem der vorherigen Ansprüche, **dadurch gekennzeichnet, dass** zwischen dem zweiten Motor (4) und der ersten Außenwand (5) eine Fahrzeugbremse (26) angeordnet ist.

14. Antriebseinheit nach einem der vorherigen Ansprüche, **dadurch gekennzeichnet, dass** eine elektronische Steuereinheit (24) benachbart und unterhalb des ersten Motors (1) angeordnet und mit dem ersten Motor (1) direkt verbunden ist.

## Claims

1. Electric drive unit with a steering motor and a propelling motor arranged coaxially relative to each other and steering or propelling a vehicle wheel, with a first motor (1) featuring a hollow drive shaft (2), through which a second drive shaft (3) of the second motor (4) extends, **characterized in that** the second drive shaft (3) extends through a first axial external wall (5) of the drive unit and is nonrotationally connected on the outside (6) to a fan wheel (7).

2. Drive unit according to one of the preceding claims, **characterized in that** the first external wall (5) forms a cooling duct (10) with a second external wall (9), with air being blown radially outward through several openings.

3. Drive unit according to claim 2, **characterized in that** parts (11) of an electronic control unit are attached to the first and/or second external wall (5, 9).

4. Drive unit according to claim 1, **characterized in that** cooling ribs (8, 27) are provided for on the external side (6) of the first external wall (5) and/or on the second external wall (9).

5. Drive unit according to claim 3, **characterized in that** cooling ribs (27) and a deflector (12) are provided for on the second external wall (9), with the air flowing radially outward being deflected in such a manner that it flows in axial direction alongside the radial external wall (13) of the drive unit.

6. Electric drive unit with a steering motor and a propelling motor arranged coaxially relative to each other and steering or propelling a vehicle wheel, with a first motor (1) featuring a hollow drive shaft (2), through which a second drive shaft (3) of the second motor (4) extends, **characterized in that** at least one axial end of the rotor (14) of the second motor (4) features a second fan wheel (15) which moves the interior air of the second motor (4) in such a manner that it flows around the the stator (16) of the second motor (4).

7. Drive unit according to claim 6, **characterized in that** the radial external wall (13) features at least one cooling duct (17), through which the air moved by the second fan wheel (15) is guided axially alongside the second motor (4).

8. Drive unit according to one of the preceding claims, **characterized in that** cooling ribs (18, 25) are provided for on the radial external wall (13) of the drive unit and/or on an electronic unit (24) of the first motor (1).

9. Drive unit according to one of the preceding claims, **characterized in that** the housing (19) of the drive unit is linked to a vehicle frame (21) via an axial bearing (20), with the outer ring (22) of the bearing (20) being additionally linked to the vehicle frame (21) via heat-conducting material (23).

10. Drive unit according to one of the preceding claims, **characterized in that** for better heat transmission, the radial width (37) of the outer ring (22) is significantly wider than the radial width (36) of the inner ring (38).

11. Drive unit according to one of the preceding claims, **characterized in that** the radial width (37) of the outer ring (22) is at least two times wider than the radial width (36) of the inner ring (38).

12. Drive unit according to one of the preceding claims, **characterized in that** the radial overlaps (34, 35) between the housing (19) of the drive unit, the outer ring (22) of the bearing (20) and the vehicle frame (21) are wide enough to permit enough heat to be removed via heat conduction so that a first and/or second temperature level is not exceeded.

13. Drive unit according to one of the preceding claims, **characterized in that** a vehicle brake (26) is arranged between the second motor (4) and the first external wall (5).

14. Drive unit according to one of the preceding claims, **characterized in that** an electronic control unit (24) is arranged underneath the first motor (1) with direct connection to the first motor (1).

## Revendications

1. Unité d'entraînement électrique avec un moteur de direction et un moteur de traction, ceux-ci étant disposés coaxialement l'un par rapport à l'autre et assurant le braquage d'une roue de véhicule ou l'entraînement dans le sens d'un mouvement du véhicule, sachant qu'un premier moteur (1) comporte un arbre d'entrée creux (2), celui-ci étant traversé par un deuxième arbre d'entrée (3) du deuxième moteur (4), **caractérisée en ce que** le deuxième arbre d'entrée (3) traverse une première paroi extérieure axiale (5) de l'unité d'entraînement et est lié, sur la face extérieure (6), solidaire en rotation à une roue de ventilateur (7).

2. Unité d'entraînement selon une des revendications précédentes, **caractérisée en ce que** la première paroi extérieure (5) forme avec une deuxième paroi extérieure (9) un canal de refroidissement (10), à travers duquel grâce à plusieurs orifices de l'air est chassée radialement vers l'extérieur.

3. Unité d'entraînement selon la revendication 2, **caractérisée en ce que** sur la première et/ou sur la deuxième paroi extérieure (5, 9) sont appliqués des éléments (11) d'une unité de commande électronique.

4. Unité d'entraînement selon la revendication 1, **caractérisée en ce que** sur la face extérieure (6) de la première paroi extérieure (5) et/ou sur la deuxième paroi extérieure (9) sont appliquées des nervures de refroidissement (8, 27).

5. Unité d'entraînement selon la revendication 3, **caractérisée en ce que** sur la deuxième paroi extérieure (9) sont appliqués des nervures de refroidissement (27) et un déflecteur (12), ceux-ci changeant la direction de l'air se dégageant radialement vers l'extérieur de manière à ce qu'elle soit amenée en sens axial le long de la paroi extérieure radiale (13) de l'unité d'entraînement.

6. Unité d'entraînement électrique avec un moteur de direction et un moteur de traction, ceux-ci étant disposés coaxialement l'un par rapport à l'autre et assurant le braquage d'une roue de véhicule ou l'entraînement dans le sens d'un mouvement du véhicule, sachant qu'un premier moteur (1) comporte un arbre d'entrée creux (2), celui-ci étant traversé par un deuxième arbre d'entrée (3) du deuxième moteur (4), **caractérisée en ce que** sur au moins une extrémité axiale du rotor (14) du deuxième moteur (4) est appliquée une deuxième roue de ventilateur (15), celle-ci refoulant l'air à l'intérieur du deuxième moteur (4) de manière à ce qu'elle s'écoule autour du stator (16) du deuxième moteur (4).

7. Unité d'entraînement selon la revendication 6, **caractérisée en ce que** dans la paroi extérieure radiale (13) est appliqué au moins un canal de refroidissement (17), à travers duquel l'air refoulée par la deuxième roue de ventilateur (15) est amenée axialement le long du deuxième moteur (4).

8. Unité d'entraînement selon une des revendications précédentes, **caractérisée en ce que** sur la paroi extérieure radiale (13) de l'unité d'entraînement et/ou sur l'unité de commande électronique (24) du premier moteur (1) sont appliquées des nervures de refroidissement (18, 25).

9. Unité d'entraînement selon une des revendications précédentes, **caractérisée en ce que** le carter (19) de l'unité d'entraînement est lié par l'intermédiaire d'un roulement axial (20) à un châssis de véhicule (21), et **en ce que**, en plus, la bague extérieure (22) du roulement (20) est lié au châssis du véhicule (21) à l'aide d'une matière thermoconductrice (23).

10. Unité d'entraînement selon une des revendications précédentes, **caractérisée en ce que** la largeur radiale (37) de la bague extérieure (22) est beaucoup plus grande que la largeur radiale (36) de la bague intérieure (38) pour optimiser le transfert de chaleur.

11. Unité d'entraînement selon une des revendications précédentes, **caractérisée en ce que** la largeur radiale (37) de la bague extérieure (22) est au moins deux fois supérieure à la largeur radiale (36) de la bague intérieure (38).

12. Unité d'entraînement selon une des revendications précédentes, **caractérisée en ce que** les chevauchements radiaux (34, 35) entre le carter (19) de l'unité d'entraînement, la bague extérieure (22) du roulement (20) et le châssis du véhicule (21) sont si larges que grâce à une conduction thermique il est possible de dégager une quantité de chaleur si grande permettant de ne pas dépasser un premier et/ou un deuxième niveau de température.

13. Unité d'entraînement selon une des revendications précédentes, **caractérisée en ce que** entre le deuxième moteur (4) et la première paroi extérieure (5) est appliqué un frein de véhicule (26).

14. Unité d'entraînement selon une des revendications précédentes, **caractérisée en ce que** une unité de commande électronique (24) est juxtaposée et disposée en-dessous du premier moteur (1) et **en ce que** celle-ci est liée directement au premier moteur (1).
